# EUROPEAN PATENT SPECIFICATION

(11) **EP 1 927 168 B1**
(45) Date of publication and mention of the grant of the patent: **14.12.2011**
(21) Application number: 06795554.2
(22) Date of filing: 21.09.2006
(51) Int. Cl.: H01S 3/23, H01S 3/067, H01S 3/00, H05H 1/22

(54) **OPTICAL PULSE AMPLIFIER WITH HIGH PEAK AND HIGH AVERAGE POWER**
VERSTÄRKER FÜR OPTISCHE PULSE MIT HOHER SPITZEN- UND HOHER DURCHSCHNITTSLEISTUNG
AMPLIFICATEUR D'IMPULSIONS OPTIQUES DOTE D'UNE PUISSANCE DE CRETE ET D'UNE PUISSANCE MOYENNE ELEVEES

(30) Priority: 21.09.2005 EP 05291957
(43) Date of publication of application: 04.06.2008
(73) Proprietor: Ecole Polytechnique, 91128 Palaiseau Cedex (FR)
(72) Inventor: MOUROU, Gérard, F-75014 Paris (FR); GALVANAUSKAS, Almantas, Ann Arbor, MI 48105 (US); HULIN, Danièle, F-94100 Saint Maur (FR)
(74) Representative: Novagraaf Technologies
(86) International application number: PCT/IB2006/002657
(87) International publication number: WO 2007/034317

(56) References cited:
- US-A- 5 694 408
- US-A1- 2002 131 164
- US-A1- 2005 171 516
- US-B1- 6 901 090
- GALVANAUSKAS A ET AL: "Millijoule femtosecond all-fiber system" CONFERENCE ON LASERS AND ELECTRO-OPTICS. (CLEO 2001). TECHNICAL DIGEST. POSTCONFERENCE EDITION. BALTIMORE, MD, MAY 6-11, 2001, TRENDS IN OPTICS AND PHOTONICS. (TOPS), US, WASHINGTON, WA : OSA, US, vol. VOL. 56, 6 May 2001 (2001-05-06), pages 1-2, XP010559483 ISBN: 1-55752-662-1
- MOUROU G A ET AL: "The road to high peak power and high average power lasers: coherent-amplification-network (CAN)" AIP CONFERENCE PROCEEDINGS AIP USA, vol. 827, no. 1, 2006, pages 152-163, XP002430795 ISSN: 0094-243X

## Description

The invention relates to an optical pulse amplifier.

Optical pulse amplifiers are known in the art. Usually, optical pulse amplifiers comprise a laser cavity. Within the laser cavity, a bulk is pumped by a laser diode generating a pulse signal. The pulse signal is amplified by the bulk and an output high energy pulse signal is generated.

Such technology is for example used for obtaining high energy laser, such as a megajoule Laser.

However, such an optical pulse amplifier suffers the disadvantage that it is hard to cool the bulk within the cavity, mainly because the surface/volume ratio is too high. Consequently, the repetition rate of such an optical pulse amplifier is very low.

In the past ten years, it has proposed to increase the size of the bulk to increase the energy of the signal generated by the amplifier. However, as discussed above, if the size of the bulk increases, the repetition rate of the amplifier decreases.

Thus, in the prior art, it was impossible to obtain high peak power while maintaining a high average power, corresponding to a high repetition rate.

Moreover, asking for very high average powers implies very good laser efficiency solutions. It would not be acceptable to produce 150MW of average power with a typical laser efficiency of 1% for instance. Prior art solutions are not efficient enough to obtain these high average powers.

US-5694408 and US-6901090 disclose lasers comprising a laser signal source, a distribution network comprising plural stages of fiber splitters and fiber amplifiers, subsequent power amplification means for each of the branches and a laser beam combiner.

The invention aims to solve the above mentioned problem, and an object of the invention is to provide an optical pulse amplifier that can generate high peak with high average power.

It has been demonstrated in Advanced Solid State Lasers, 2001, Seattle, WA, January, Galvanauskas, et al. "Millijoule femtosecond fiber-CPA system", that short pulse fiber-based laser based on fiber-Chirped Pulse Amplification (CPA), can deliver Fourier-Transformed sub-pico-second pulse with 13 W average power.

But such fibers had not been used to produce high peak and high average power.

According to the invention, this above mentioned problem is solved by an optical pulse amplifier comprising:
- a stretcher for stretching a first pulse, and for generating an input pulse;
- a first optical fiber amplifier adapted to receive said input pulse;
- a splitter connected to an output end of said first optical fiber amplifier, said splitter having a plurality of outputs;
- a plurality of optical fiber amplifiers, each being connected to one of said plurality of outputs for generating a plurality of output pulse signals, and
- a plurality of compressors, each of the compressors being arranged for compressing a respective one of the plurality of output pulse signals.

With an optical pulse amplifier according to the invention, the output pulse signal that are generated by the plurality of optical fiber amplifiers are all coherent because they are based on the splitting of one input pulse. Thus, the power of the individual output pulse signals are added to obtain the power of the global signal generated by the amplifier. Such an amplifier can thus generate high peak power, when the number of optical fiber amplifiers is sufficient and/or if the duration of the input pulse is short enough.

Moreover, as the surface/volume ratio of an optical fiber is much higher than the ratio of an bulk amplifier, the amplifier of the invention can be easily cooled and thus, the repetition rate is increased. The fibers of the invention have also the advantage that the efficiency between a device generating the input pulse, for example a pumping diode, and the first fiber, is relatively good.

In order to add the output signal in an efficient way, said plurality of optical fiber amplifier may be positioned in a fiber bundle for generating output pulse signals in a common direction.

In accordance with the invention, in order to be able to amplify short pulses, the optical pulse amplifier of the invention comprises:
- a stretcher for stretching a first pulse, and for generating said input pulse:
- a plurality of compressors, each of the compressors being arranged for compressing a respective one of said plurality of output pulses.

For short input pulses, such a stretcher is necessary to avoid non linearity effects within the fibers. Stretching the input pulse and compressing the output pulses avoid these effects.

Moreover, in order to obtain high peak powers, a certain number of fibers in the amplifier of the invention can be chosen.

For example, said plurality of optical fiber amplifiers can comprise N fibers, N being more than 100, or more than 1000, or more than 10⁶.

Such a number of fibers can be difficult to obtain with only one splitter. Thus, in the amplifier of the invention, each optical fiber amplifier is connected to one of said plurality of outputs by at least one intermediary optical fiber amplifier, and at least one intermediary splitter having a plurality of outputs.

It is also possible to organise the plurality of fibers into stages in order to obtain a large number of fibers. To do so, the amplifier of the invention may comprise a plurality of successive stages, each stage comprising a plurality of input splitter and a plurality of optical fiber amplifiers, said input splitters comprising a plurality of outputs, each input splitter of each stage being connected to a respective optical fiber amplifier of the preceding stage.

Moreover, in order to obtain a relatively cheap amplifier, said plurality of optical fiber amplifiers comprise identical optical fiber amplifiers.

We now describe a particular embodiment of the invention with respect of the drawings in which:
- FIG. 1 illustrates an optical pulse amplifier ;
- FIG. 2 illustrates an amplifier providing Chirped Pulse Amplification;
- FIG. 3 illustrates a general view of the optical pulse amplifier according to the invention;
- FIG. 4 illustrates the wavefront control that can be provided by the optical pulse amplifier according to the invention;
- FIG. 5 illustrates a detailed embodiment of the optical pulse amplifier according to the invention;
- FIG. 6A, 6B, 6C illustrate the shape of a fiber bundle in a optical pulse amplifier according to the invention;
- FIG. 7 illustrates a single fiber amplifier used in the fiber amplifier arrangement according to the invention.

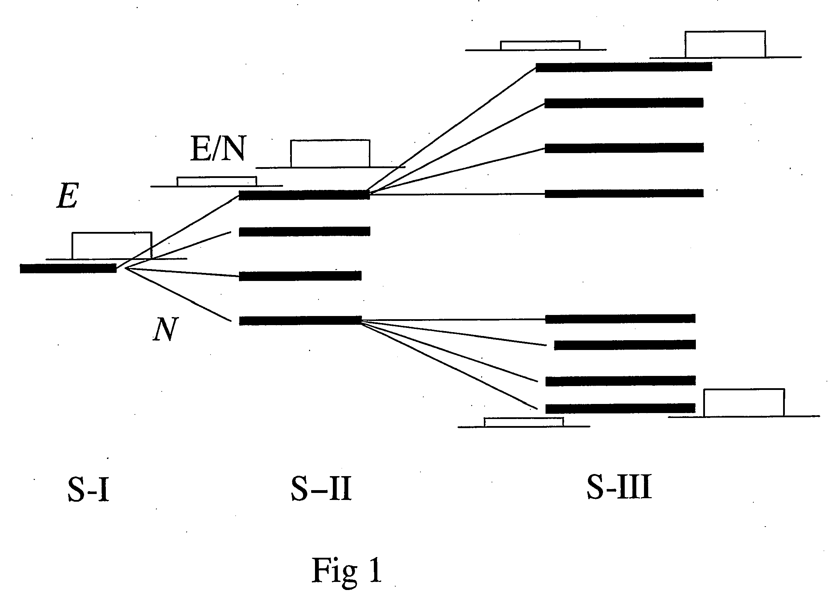

As schematically illustrated FIG. 1, an amplifier comprises identical fiber-CPA sections 12. The last stage of the amplifier comprises *Nt* identical fibers. The network is composed of *n* stages SI, SII, SIII. Each stage consists of *N* fibers. For cost reasons; all these fibers are identical and identically pumped.

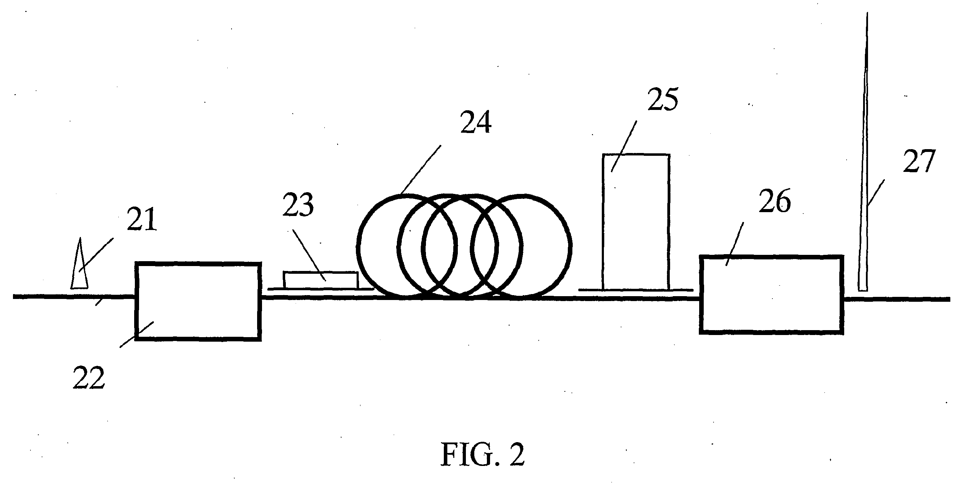

The Chirped Pulse Amplification in such fibers has been described and demonstrated in Advanced Solid State Lasers, 2001, Seattle, WA, January, Galvanauskas, et al. "Millijoule femtosecond fiber-CPA system". Illustrated FIG. 2, a pulse 21 is stretched by a stretcher 22 to produce a stretched pulse 23. The stretched pulse 23 is then amplified by a fiber amplifier 24 to produce an amplified stretched pulse 25. The amplified stretched pulse 25 is finally compressed by a compressor 26, to produce a amplified pulse 27.

In the system illustrated FIG. 1, the initial pulse is first stretched and amplified to a level *E= Fₛ*.*A* where *Fₛ* is the saturation fluenceor the dielectric breakdown fluence *F_{D}* and *A* the fiber core cross-sectional area. If we want a total energy *Eₜ* the last stage total number of fibers will be *Nₜ* = *Eₜ*/*E.*

If we split for instance, by *N*=10 each input channel, we will have to amplify each one by *G*= *N*=10 after splitting. In this configuration all the fiber sections are identical and work identically throughout the network. This facilitates greatly the construction of this amplifying network built of identical parts.

To improve the cooling, the fiber network, where most of the losses and heat occur can be removed from the final combining section. Light can be transported without incurring significant losses using low loss fibers.

The fiber bundle transverse distribution will provide the possibility to control the final laser beam pupil as well as the spatial coherence.

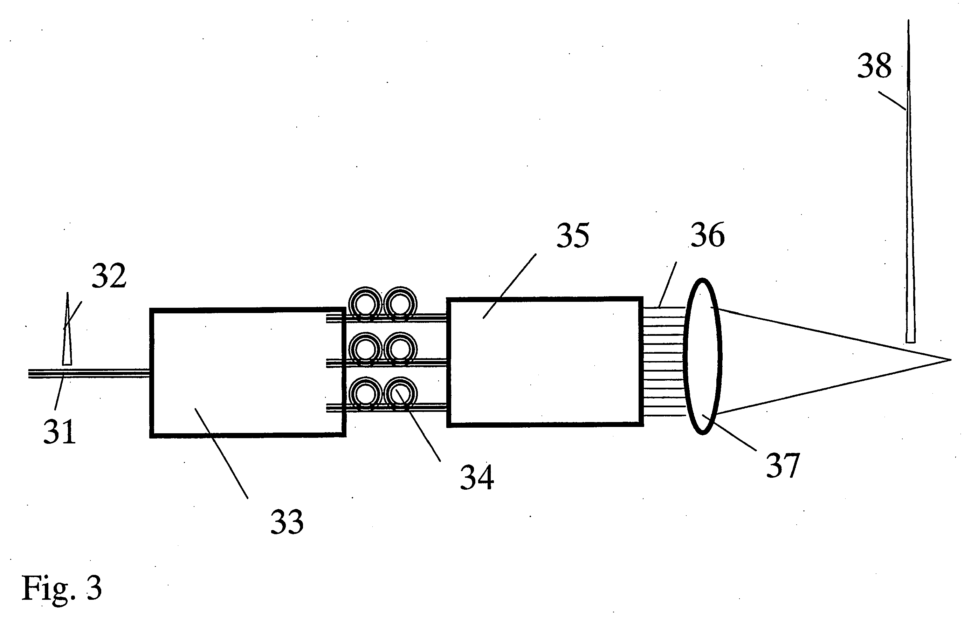

As illustrated FIG. 3, an optical pulse amplifier 31 according to the invention comprises a first fiber amplifier 32 for amplifying a pulse 32. The amplifier 31 also comprises a fiber network 33. The fiber network will be described in a more detailed manner below. The output signal that is generated by the fiber network is transported by transport fibers 34, to the compressors 35. The outputs of the compressors 35 define a fiber bundle 36 comprising a plurality of fibers, for example around 10⁶. The fiber bundle is associated to a pupil 37 to form a fiber array. The addition of the signal generated by each fiber of the fiber bundle provides a amplified pulse 38.

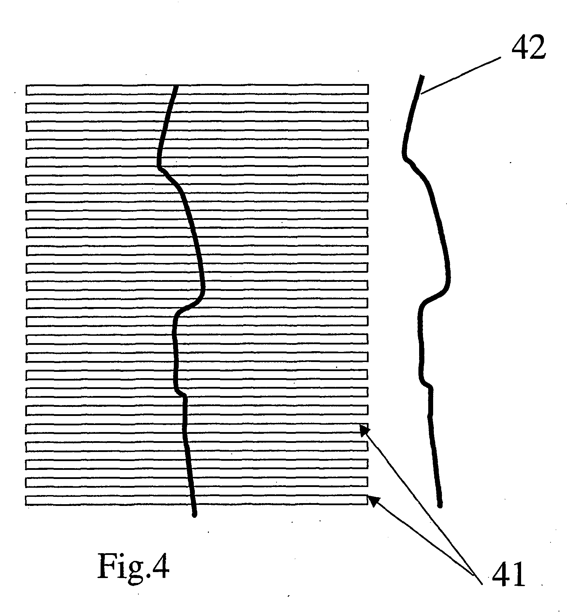

Because we have the ability to control the phase of each fiber we are able to change and correct the wavefront at will much like with a deformable mirror. This is illustrated FIG. 4, in which the fiber bundle 41 can produce a wavefront 42.

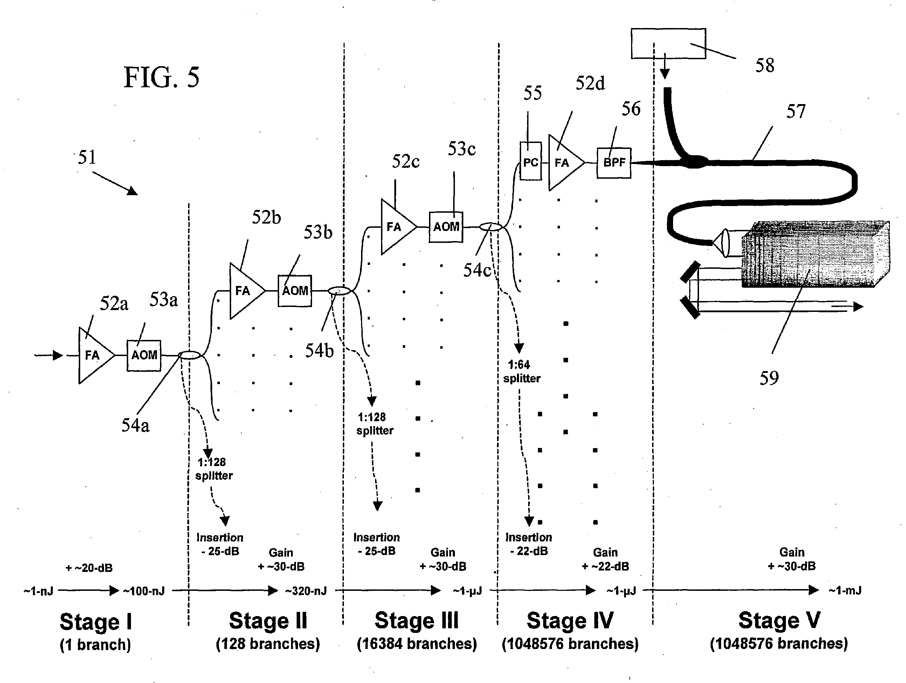

We now described the fiber network according to the invention. As illustrated FIG. 5, an optical pulse amplifier 51 according to the invention comprises a first optical fiber amplifier 52a. The first optical fiber amplifier 52a will be described in a more detailed manner below. The first optical fiber amplifier 52a is connected to an acousto-optic modulator 53a. The function of the acousto-optic modulator 53a is to suppress amplified spontaneous emission that is produced by the fiber amplifier. The first optical fiber amplifier 52a receives an input pulse that is generated by a pulse generator. The input pulse is for example a sub-picosecond pulse. First optical fiber amplifier 52a, and acousto-optic modulator 53a form stage SI of the optical pulse amplifier 1.

The acousto-optic modulator 53a is connected to a splitter 54a. The splitter 54a comprises an input, and a plurality of outputs. The number of outputs of the splitter 54a is for example 128. An optical fiber amplifier 51 b is connected to each respective output of the splitter 54a. Each optical fiber amplifier 51 b is connected to a respective acousto-optic modulator 52b. The 128 optical fiber amplifiers together with their respective acousto-optic modulator form stage SII of the optical pulse amplifier 1. Thus, stage SII comprises 128 branches, and each acousto-optic modulator is connected to a respective splitter 53b.

The above scheme of stage SII is then reproduced several times to form stages SIII, ..., Sn. For example, in FIG. 5, stage SIII comprises 128*128=16384 branches, corresponding to 128 substages identical to stage SII.

In stage SIII, each acousto-optic modulator 52c is connected to a respective splitter 53c. The splitter 53c comprises 64 outputs. The outputs of each of the splitters of stage SIII are connected to a Pockel cell 55 for isolation, then to a fiber amplifier 52d, and then to a bandpass filter (BPF) 56. The 1048576 (16384*64) branches comprising each a Pockel cell 55 for isolation, then to a fiber amplifier 52d, and then to a bandpass fliter form stage IV of the amplifier 1.

At the end stage S IV, each BPF is connected to a Large Mode Area LMA Fiber amplifier 57. LMA Fiber amplifier 57 is for example a fiber with a 50 micrometer core and a double clad Yb fiber pumped by a diode 58, to achieve cladding pumping. These 1048576 LMA Fiber amplifiers form stage S V which is the last stage of the amplifier according to the invention. Thus, there is no power splitting between stages S IV and S V, and stage S V is an energy-extracting stage. Compressors 59 are positioned in stage S V to compress the pulse.

In FIG. 5, we have represented stages S I, S II and S III with splitters with 128 outputs, but it is understood that other splitters with a plurality of outputs can be used according to the invention, with another number of stages and another number of outputs for the splitters.

All fiber-star splitters can be made with standard single-mode fiber techniques. One datasheet example of commercial 1:32 and 1 : 4 fiber-star splitters can be found at www.fi-ra.com. This particular device can ensure 1 : 32 splitting ratio with 17-dB to 18-dB insertion loss (32-times splitting is 15-dB loss per each channel + only 3-dB extra device loss) and 1 : 4 splitting ration with ∼7-dB insertion loss. 1: 2 splitters are very standard with typical insertion losses of ∼3.5-dB (the sign "∼" meaning "approximately").

Required splitting rations of 128-times and 64-times can be either achieved by multiplexing the above splitters (128 = 32 x 4 and 64 = 32 x 2), or fabricating single-stage star-couplers with required splitting ratios. Consequently, we can take as an estimate of the insertion loss per splitting stage to be -25-dB per 1 : 128 stage and -22-dB for 1 : 64 stage.

Detailed distribution of gain in each fiber amplifier stage of each optical branch is shown in the figure. Gain in each stage is selected such that it compensates the insertion loss of the preceding splitting stage and, furthermore, provides additional gain necessary to achieve the total required target energy of ∼1-mJ at the output of each optical branch in stage S V. Note, also that the projected gain in each stage does not exceed the maximum gain of >35-dB achievable with a typical single-mode fiber amplifier. Overall gain balance is selected such that 1-ns long stretched-pulse energy in a single-mode fiber never exceeds ∼1-µJ, so that optical damage can be avoided and nonlinear effects in each fiber amplifier stage can be kept under control.

The Applicant has experienced that ∼1-µJ energy is required to inject from the last single-node stage (stage S IV) into LMA fiber in the 5-th stage. Since the fiber core size between IV-th and V-th stages becomes significantly mismatched, from approximately ∼6-µm mode-field diameter (MFD) for a single-mode fiber to ∼ 40-µm to 50-µm MFD in the LMA fiber, adiabatically-tapered transition needs to be inserted between these stages. Such adiabatic tapers are routinely made with standard fiber processing equipment.

Active optical gates between different amplification stages are also used according to the invention. Purpose of these gates is two fold. First, optical gate at the input of stage I is used to down-count pulse repetition rate from initial 50-100-MHz from a mode-locked seed to 15-kHz in the fiber amplifier chain (necessary for high-energy pulse extraction). Second, additional gates are required at the output of each fiber amplifier at the end of stages I, II and III (and prior to each subsequent fiber-start splitter, as shown in the drawing) in order to suppress amplified spontaneous emission (ASE) between the amplifier stages, i.e. to ensure that average power in amplified chirped pulses exceeds that of the ASE background of each of the fiber amplifier stages. Based on common practice with current fiber CPA systems the best devices for this are fiber-pigtailed Acousto-Optic Modulators (AOM), since they can achieve on-off extinction ratios of higher than 80-dB. The important practical detail of the proposed design is that no AOM-driven gates are used between the stages IV and V. Instead, astandard 10-20-nm fiber-pigtailed bandpass filters accommodating the complete stretched-pulse spectrum at 1064-nm, are employed at the output of each stage-IV amplifier in each separate optical branch. Such narrow-bandpass filters allow to suppress ASE background by >10-dB, since optical signal at 1064-nm is spectrally separated from dominant-ASE peak at ∼1039-nm. The significant practical advantage of this configuration that one need to employ only 16384 + 128 + 2 = 16398 AOM systems (modulator + RF driver and corresponding power supplies) instead of ∼10⁶ AOM units required if placed between stages IV and V. Instead we would use simple and inexpensive passive fiber components (bandpass filters).

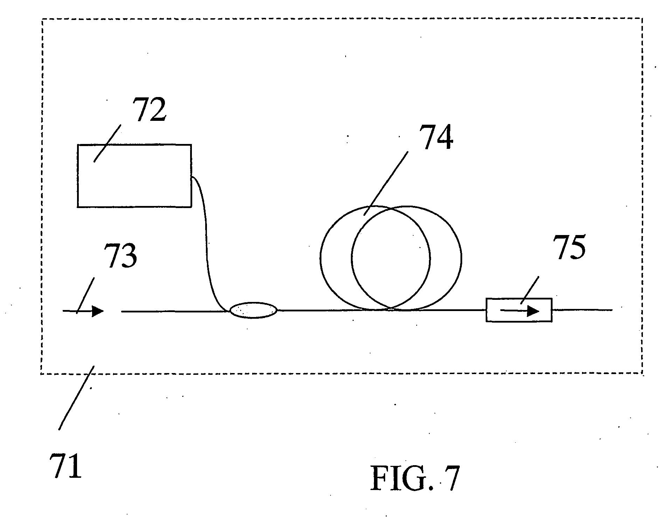

As illustrated FIG. 7, all the pumping of the fiber amplifiers 71 in the stages I through IV is accomplished using standard 980-nm single-mode laser diodes used in telecom industry. This provides a low cost device. Such diodes are very reliable, with expected lifetime of ∼10⁶ hours (>100 years of continuous operation). The fiber amplifier comprises a pump diode 72, pumping an input pulse 73 into an Yb-fiber 74. An isolator 75 is provided at the output of the Yb-fiber 74.

As for the pumping of stage-V amplifiers, one would need to use broad-stripe 980-nm multi-mode pump diodes. Again, their cost is about the same as of SM 980-nm diodes and life-time currently is >100,000 hours (>10 years of continuous operation). It is expected to reach >500,000 hours in the nearest future (>50 years). Such lifetimes would make such a laser systems virtually maintenance-free, saving significant operation costs for such a facility. Pump power of 20-25-W is required per each cladding-pumped amplifier stage. For maximum energy extraction pump and signal paths should be counter-propagating. This can be achieved by using various side-pumping techniques (V-groove technique, for example).

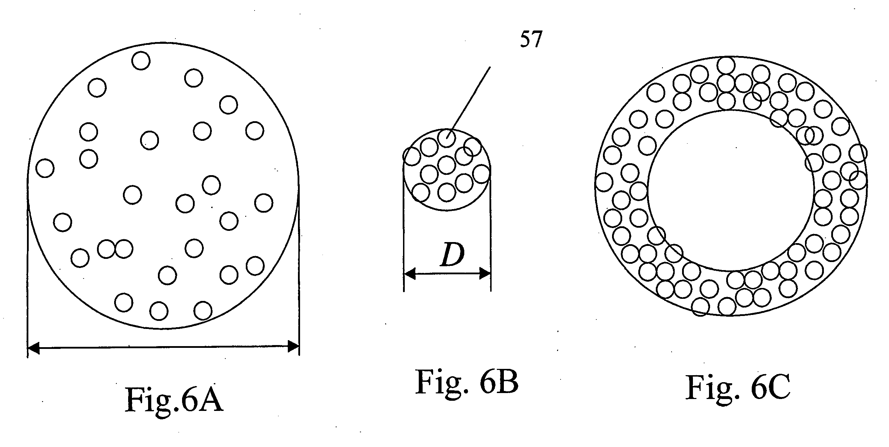

As illustrated FIG. 6A, 6B and 6C, the fibers 74 of the last stage are organized in an fiber array to form a pupil configuration. For about 10⁶ fibers, the diameter of the array can be relatively small, typically around 6 meters. The pupil is used to focus the output signals to a target.

According to an embodiment of the invention, pulse stretching and compression is implemented in the fiber network of the invention. A conventional approach , not falling within the scope of the invention, would be to use standard diffraction-grating stretching and compression. In this case, pulses from a mode-locked seed oscillator, at the central wavelength of ∼1064-nm, for example, would be stretched in the diffraction-grating stretcher and, after amplification in the multistage optical amplifier path, be recompressed in a diffraction-grating compressor.

In this case coherent combining of 10⁶ optical fibers should be achieved prior to the compression stage. Diffraction-grating compressors need to accommodate uniquely high average and peak powers. Very large gratings could be used for this purpose. Also, since diffraction-grating compressors are polarization-sensitive, all fibers and fiber components in the CN-CPA system would need to be polarization-maintaining (PM). Typically, PM fiber components are more expensive compared to non-PM one's. Therefore, using polarization-insensitive pulse compression technologies could bring significant economic advantage here.

Alternatively, in accordance with the invention, a compact (longitudinal) volume-chirped-Bragg grating compressor can be used at the output of each optical branch output. In this case, each individual compressor would experience low peak and average powers. Coherent beam combining would need to be accomplished after pulse recompression (in the far-field). Another principal advantage of using volume-grating compressors is that such compressor can be configured to be used in polarization-insensitive configuration. As a result, all CN-CPA system could be built without using PM fiber components.

Another important advantage offered by volume Bragg compressors compared to diffraction-grating ones is that volume-grating compressors can be >90% efficient, which is much higher than has been achieved with conventional diffraction-grating compressors. Again, increase in efficiency has a dramatic effect on the economy of such a large-scale system.

Since ∼ 10⁶ fibers should be transversely combined into a single fiber-array, transversal size of each individual volume-grating compressor is important. We estimate that for compressing ∼1-mJ pulses transversal compressor aperture should be ∼ 5-mm. With such individual-compressor size, total fiber array diameter for accommodating 10⁶ fibers should be ∼6 meters. This size is not excessive for a considered large-scale system.

According to the invention, it is also important to coherently combine all 10⁶ optical-branch outputs into a single coherent beam. Active coherent combining of several cw fiber lasers has been demonstrated already in the publication "8-W coherently phased 4-element fiber array", Anderreg Brosnam, Weber, Komine, Wickam, in Proceedings of SPIE, Vol. 4974, Advances in Fiber Lasers, edited by L.N. Durvasula (SPIE, Bellingham, WA, 2003), pp. 1-6.

The principle of active coherent combining is simple - small fraction of fiber array output is sampled with a beam-splitter and then imaged into a photo-detector array, which mimics the geometry of the fiber array. This similarity between fiber and detector arrays allows linking each individual detector with each individual fiber in the array. Obviously, number of detectors should match the number of individual fibers in the fiber-array output aperture. This sampled optical signal is mixed with a frequency-shifted reference signal, producing beat signal in each detector. With a proper electronic circuitry this beat signal can be converted into a signal proportional to the phase difference between the reference optical signal and the particular fiber output. This signal can be used to control individual phase modulators in each separate optical branch, so that the phase difference between reference and each fiber output can be eliminated, i.e. output beams from all fiber are in phase. Alternatively, a prescribed constant (or varied from fiber to fiber) phase difference can be introduced between different output beams, thus allowing steering the phased beam or controlling its focusing and defocusing.

For CN-CPA systems phase-control of each separate optical branch is not sufficient. One also needs to control absolute time delays between each of the optical paths as well. This can be accomplished by using fiber stretching (through piezoelectric modulators, for example) in each optical branch. Location of these optical-length/optical-phase modulators could be at the input of each fiber in the IV-th stage of the system, as shown in the figure. However, for this to work one needs to devise a method of measuring not only optical phase difference between the reference and each individual fiber output in the array, but also to measure the relative time delays between them and to apply the proportional feedback signal to each fiber-length and phase modulators in order to correct the length and phase mismatch simultaneously. Indeed, this can be accomplished in a setup very similar to the one used in cw case.

In fiber CN-CPA system reference path also should be an amplifier chain for the same stretched pulse from the initial seed pulse. It can be sampled at the input of the stage I prior to any optical-path splitting, as shown in the figure. The amplified reference signal should be also frequency shifted with respect to the seed signal, for example using additional AOM modulator in the reference beam path, operating at a different RF-driving frequency compared to the AOM modules used in the main CN-CPA system in the optical gates described above. The amplified reference optical signal should be compressed in the identical pulse compressor, as used at the output of each individual fiber at the end of stage V. This reference beam should be mixed with the sampled fiber-array output in a manner identical to the method used for cw coherent combining. After this these overlapping beams should be passed through a single pulse stretched (diffraction-grating stretcher for example) and then imaged into the photo-detector array. As it is well known, if two stretched chirped pulses are delayed with respect to each other then there will be a beat signal with a frequency proportional to the delay between these two identical chirped pulses. Consequently, by measuring a beat frequency from each individual detector one could determine optical path difference between the particular optical branch in the array and the reference beam. This beat frequency can, therefore, be converted into electronic feedback signal proportional to the measured time-delay in order to control the optical-path modulator. Feedback control loop should ensure that the beat signal is kept at the shift-frequency of the reference signal, thus matching optical path lengths for all fiber outputs with high accuracy. In addition, fine-tuning of the residual phase-difference to the degree sufficient to achieve phase-compensation can be accomplished within each of the channel by measuring phase difference between the reference and individual channel signal in a manner identical to the method used for cw coherent beam combining. Such a system would ensure accurate compensation of both the time delay and the phase difference across the fiber-laser array.

We now provide an example of the invention in combination with the Compact Linear Collider (CLIC) planned to be built at CERN to explore the frontiers of high energy physics. CLIC will be enormous with an overall length of 40-km. CLIC because of its size will certainly be the last accelerator based on conventional technology. CLIC is planned to reach the frontier of the standard model. This system will require 1.5TeV, center of mass energy electrons and positrons. The charge per pulse will be 4nC with a repetition rate of 15 kHz. These pulses will be accelerated using the so called Two-Beam Acceleration technique (TBA). The expected wall plug power to RF power efficiency will be X%. The RF to electron beam efficiency will be of Y% leading to an overall TBA efficiency of 8%.

Let's oppose this alternative with one based on laser driven wake-field acceleration a very promising technique introduced 20 years ago and made possible with the ultra-high-intensity laser entrée. Very recently it was shown that this technique could produce quasimono-energetic beam centered around 150MeV over a millimeter. Multi-GeV will certainly be possible in the near future with existing lasers. Simulation reveals that much higher energy in the 100GeV and possible TeV could be obtained on extremely short i.e. meters using laser wake-field acceleration.

Today or in the near future we could be able to produce laser peak power to produce acceleration in the 100GeV at a mHz (one shot every 20mn). This is far from sufficient for high energy physicists who need a repetition rate 10⁷ times higher, i.e. 15 kHz. To accelerate one electron or positron pulse (1.5TeV, 4nC) with an assuming 20% optical to electron/positron efficiency at 15kHz will require 5kJ, 100fs, 50PW/pulse with an average power of 150MW, six orders of magnitude beyond today's state-of-the-art.

If we were using the CNA approach, it will take at 1 mJ/fiber, 510⁶ fibers. for the electrons and the exact same number for the positrons, a total of 10⁷ fibers.

We base our design on a 15W per fiber. This is nowadays relatively modest compare to the 1 kW/fiber average power for single mode fiber that has been announced recently. But remember what is important is first the energy and then the average power. If we assume a wall-plug-to-fiber-laser power efficiency of 40% and a 20% optical to electron beam efficiency, we could expect an overall efficiency of 8% very comparable to the RF approach.

Here again the CNA approach makes possible the production of enormous average power with high efficiency. This power will not have to be produced on the experimental site but rather remotely and distributed over a large volume for cooling and transported with high efficiency by low loss fibers on site. As mentioned above the distribution across the pupil can also be chosen arbitrarily and the wavefront controlled arbitrarily.

CLIC will require ∼10⁶ fibers, each ∼ 2 meter long, plus connecting fibers. Therefore, the overall fiber length will be between 2000 and 10 000 km. This is a large number, but completely economically feasible since it constitutes just a negligible fraction of the world wide fiber-communication network.

The power of 150MW is a fraction of a nuclear plant of 1 GW. The number of diodes involved (10⁶) is a fraction of the annual telecommunication laser diode production. If to assume $100/ watt such a system would cost $10⁵ per kW, and - $2 billion of total diode cost. This is large cost, but still constitutes only a fraction of the required pump-power cost compared to solutions based on conventional solid-state laser technology.

According to another embodiment of the invention, the optical pulse amplifier of the invention can be used as a laser-driver to provide laser fusion. The driver is based on a large number (10⁷) of multimode fibers. The addition of this large number of fibers will guaranty a smooth deposition of energy on the target. Also the fiber will be diode-pumped and therefore will provide an efficiency greater than 50%. Pulse duration and pulse shape can be easily adjustable from the 0.1-10ns. The repetition rate as well can be adjusted from 0-1 kHz.

A typical laser-driven fusion power plant will need to deliver one gigawatt. Current design on laser-fusion calls for a scientific gain of 300. The scientific gain is the reaction energy output over the laser input energy. Using the concept of fast ignition, to get a scientific gain of 300 will require 300kJ delivered in few nanoseconds of laser-driving energy focused on a target of ∼1mm size. To avoid instabilities, the laser energy needs to be uniformly deposited in time and in space on the target. This condition will require a large number of beams incoherent with each other. Also for a scientific gain of 300 and an engineering gain of 100 we will need an efficiency- laser output over wall plug power-of 30%.

All these requirements could be met using a large bundle of large core multimode fibers. It will provide simultaneously the desired specifications: energy per pulse, beam spatial and temporal incoherence, laser efficiency, high repetition rate. In addition power can be transported without virtually any losses to the interaction chamber by low loss fibers. The system relies on manufacturing processes. It has the advantage of being easy to build, easy to align and maintain. It is rugged and well adapted to an industrial environment.

We know describe a example of such a driver, for a typical power plant output 1 GW or a GJ/s.

With an engineering gain of 100 the laser energy per second should is 10MJ/s.

If we consider that we need 200kJ/pulse to get an engineering gain of 100 it means we need to pulse the driver at 50Hz.

We need to produce 200kJ per pulse with multimode fibers with a core diameter of several hundred microns. Such a fiber can produce 20mJ per fiber. Each pulse has several ns pulses duration. The number of required fibers is then 10⁷. The saturation fluence of the fiber is 50J/cm². The surface area/fiber is 20mJ/50J equals 410 ⁻⁴cm² or a diameter of ∼2 10⁻²cm
The total fiber surface area is 4 10³cm² or 0.4 m². If the input pulse is not stretched, the compressor 59 of FIG. 5 is not needed in this embodiment.

The number of fibers in the last stage can be about 10⁶ and the signal is based on a single master oscillator that provides a single frequency output. The alternative would be to use a source with a large spectrum that could be produced for instance by a short pulse that has been beforehand spectrally broadened by self phase modulation prior to injection. This source confers to the entire system a very short coherence length as short as few femtoseconds. The proposed source is very efficient (>50% wall plug efficiency) and delivers 200kJ/pulse. It has also the sought after desirable characteristic to be spatially and temporally incoherent, with adjustable temporal characteristic, i.e. duration (ns) and pulse shape. Finally it possesses a controllable repetition rate (0-1kHz). This system uses the well established fiber technology, rugged, well adapted to manufacturing, and to an industrial environment.

## Claims

1. Optical pulse amplifier (51) comprising:
- a stretcher for stretching a first pulse, and for generating an input pulse;
- a first optical fiber amplifier (52a) adapted to receive said input pulse;
- a splitter (54a, 54b, 54c) connected to an output end of said first optical fiber amplifier, said splitter having a plurality of outputs; and
- a plurality of optical fiber amplifiers (52b, 52c, 52d, 57), each being connected to one of said plurality of outputs for generating a plurality of output pulse signals,
**characterized in that** said optical pulse amplifier further comprises:
- a plurality of compressors, each of the compressors being arranged for compressing a respective one of the plurality of output pulse signals.

2. Optical pulse amplifier according to claim 1 wherein said plurality of optical fiber amplifiers is positioned in a fiber bundle (36, 37) for generating output pulse signals in a common direction.

3. Optical pulse amplifier according to any of the preceding claims , wherein said plurality of optical fiber amplifiers comprises N fibers, N being larger than 100, larger than 1000, or larger than 10⁶.

4. Optical pulse amplifier according to any of the preceding claims, wherein said optical fiber amplifiers (52a, 52b, 52c, 52d, 57) are arranged so as to form a plurality of successive amplifier stages (SI, SII, SIII, SIV, SV) comprising:
- a first stage (SI) comprising said first optical fiber amplifier (52a);
- a second stage (SII) comprising a splitter (54a) and an associated plurality of optical fiber amplifiers (52b), said splitter (54a) having an input connected to said output end of said first optical fiber amplifier (52a) and a plurality of outputs, each output being connected to a respective one of said optical fiber amplifiers (52b) of said second stage; and
- at least two stages (SIII, SIV) comprising, each, a plurality of input splitters (54b, 54c) and an associated plurality of optical fiber amplifiers (52c, 52d), each of said input splitters (54b, 54c) having an input connected to a respective optical fiber amplifier (52b, 52c) of the preceding stage and a plurality of outputs, each output being connected to a respective one of said optical fiber amplifiers (52c, 52d) of that stage.

5. Optical pulse amplifier according to claim 4, wherein:
the last one (SIV) of said at least two stages consists of a plurality of branches, each of the branches comprising, in sequence, a Pockels cell (55) for isolation, a respective one of said optical fiber amplifiers (52d) of that stage (SIV) and a bandpass filter (BPF), and wherein
an output of each of said bandpass filters (BPF) is connected to a respective one of a corresponding plurality of large mode area fiber amplifiers (57) for generating a corresponding one of said plurality of output pulse signals.

6. Optical pulse amplifier according to any of the preceding claims, further comprising means for focusing said plurality of output pulse signals.

7. Laser comprising a seed source for generating said first pulse and at least one optical pulse amplifier according to any of the preceding claims.

## Patentansprüche

1. Optischer Pulsverstärker (51), umfassend:
- eine Dehnvorrichtung zum Dehnen eines ersten Pulses und zum Erzeugen eines Eingangspulses;
- einen ersten optischen Faserverstärker (52a), der eingerichtet ist, den Eingangspuls zu empfangen;
- einen Strahlteiler (54a, 54b, 54c), der mit einem Ausgangsende des ersten optischen Faserverstärkers verbunden ist, wobei der Strahlteiler eine Mehrzahl von Ausgängen aufweist; und
- eine Mehrzahl von optischen Faserverstärkern (52b, 52c, 52d, 57), wobei jeder mit einen der Mehrzahl von Ausgängen verbunden ist, um eine Mehrzahl von Ausgangspulssignalen zu erzeugen,
**dadurch gekennzeichnet, dass** der optische Pulsverstärker ferner umfasst:
- eine Vielzahl von Kompressoren, wobei jeder der Kompressoren eingerichtet ist, ein jeweiliges der Mehrzahl von Ausgangspulssignalen zu komprimieren.

2. Optischer Pulsverstärker nach Anspruch 1, wobei die Mehrzahl von optischen Faserverstärkern in einem Faserbündel (36, 37) angeordnet ist, um Ausgangspulssignale in einer gemeinsamen Richtung zu erzeugen.

3. Optischer Pulsverstärker nach irgendeinem der vorhergehenden Ansprüche, wobei die Mehrzahl von optischen Faserverstärkern N Fasern umfasst, wobei N größer als 100, größer als 1000 oder größer als 10⁶ ist.

4. Optischer Pulsverstärker nach irgendeinem der vorhergehenden Ansprüche, wobei die optischen Faserverstärker (52a, 52b, 52c, 52d, 57) eingerichtet sind, eine Mehrzahl von aufeinanderfolgenden Verstärkerstufen (SI, SII, SIII, SIV, SV) zu bilden, umfassend:
- eine erste Stufe (SI), die den ersten optischen Faserverstärker (52a) umfasst;
- eine zweite Stufe (SII), die einen Strahlteiler (54a) und eine zugeordnete Mehrzahl von optischen Faserverstärkern (52b) umfasst, wobei der Strahlteiler (54a) einen Eingang aufweist, der mit dem Ausgangsende des ersten optischen Faserverstärkers (52a) und einer Mehrzahl von Ausgängen verbunden ist, wobei jeder Ausgang mit einem entsprechenden der optischen Faserverstärker (52b) der zweiten Stufe verbunden ist; und
- zumindest zwei Stufen (SIII, SIV), die jeweils eine Mehrzahl von Eingangsstrahlteilern (54b, 54c) und eine zugeordnete Mehrzahl von optischen Faserverstärkern (52c, 52d) aufweisen, wobei jeder der Eingangsstrahlteiler (54b, 54c) einen Eingang aufweist, der mit einem entsprechenden optischen Faserverstärker (52b, 52c) der vorhergehenden Stufe und einer Mehrzahl von Ausgängen verbunden ist, wobei jeder Ausgang mit einem entsprechenden der optischen Faserverstärker (52c, 52d) dieser Stufe verbunden ist.

5. Optischer Pulsverstärker nach Anspruch 4, wobei:
zumindest eine (SIV) der zumindest zwei Stufen aus einer Mehrzahl von Verzweigungen besteht, wobei jede der Verzweigungen in Folge eine Pockels-Zelle (55) zur Isolation, einen entsprechenden der optischen Faserverstärker (52d) dieser Stufe (SIV) und einen Bandpassfilter (BPF) umfasst, und wobei ein Ausgang von jedem der Bandpassfilter (BPF) mit einem entsprechenden einer entsprechenden Mehrzahl von Faserverstärkern (57) mit großem Modenbereich zum Erzeugen eines entsprechenden der Mehrzahl von Ausgangspulssignalen verbunden ist.

6. Optischer Pulsverstärker nach irgendeinem der vorhergehenden Ansprüche, der des Weiteren Mittel zum Fokussieren der Mehrzahl von Ausgangspulssignalen umfasst.

7. Laser, der eine Keimquelle zum Erzeugen des ersten Pulses und zumindest einen optischen Pulsverstärker gemäß einem der vorhergehenden Ansprüche umfasst.

## Revendications

1. Amplificateur (51) d'impulsions optiques comprenant:
un extenseur destiné à l'extension d'une première impulsion, et à la génération d'une impulsion d'entrée ;
un premier amplificateur (52a) à fibre optique adapté pour recevoir ladite impulsion d'entrée ;
un diviseur (54a, 54b, 54c) connecté à une extrémité de sortie dudit premier amplificateur à fibre optique, ledit diviseur ayant une pluralité de sorties ; et
une pluralité d'amplificateurs (52b, 52c, 52d, 57) à fibre optique, chacun étant connecté à l'une de ladite pluralité de sorties en vue de générer une pluralité de signaux d'impulsion de sortie,
**caractérisé en ce que** ledit amplificateur d'impulsions optiques comprend en outre:
une pluralité de compresseurs, chacun des compresseurs étant agencé pour comprimer un signal respectif de la pluralité de signaux d'impulsion de sortie.

2. Amplificateur d'impulsions optiques selon la revendication 1 dans lequel ladite pluralité d'amplificateurs à fibre optique sont positionnés dans un faisceau de fibres (36, 37) en vue de générer des signaux d'impulsion de sortie dans une direction commune.

3. Amplificateur d'impulsions optiques selon l'une des revendications précédentes, dans lequel ladite pluralité d'amplificateurs à fibre optique comportent N fibres, N étant supérieur à 100, supérieur à 1000, ou supérieur à 10⁶.

4. Amplificateur d'impulsions optiques selon l'une des revendications précédentes, dans lequel:
lesdits amplificateurs (52a, 52b, 52c, 52d, 57) à fibre optique sont agencés de manière à former une pluralité d'étages (SI, SII, SIII, SIV, SV) d'amplificateurs successifs comprenant:
un premier étage (SI) incluant ledit premier amplificateur (52a) à fibre optique ;
un deuxième étage (SII) comprenant un diviseur (54a) et une pluralité associée d'amplificateurs (52b) à fibre optique, ledit diviseur (54a) ayant une entrée connectée à ladite extrémité de sortie dudit premier amplificateur (52a) à fibre optique et une pluralité de sorties, chaque sortie étant connectée à un amplificateur respectif desdits amplificateurs (52b) à fibre optique dudit deuxième étage; et
au moins deux étages (SIII, SIV) chacun comprenant une pluralité de diviseurs (54b, 54c) d'entrée et une pluralité associée d'amplificateurs (52C, 52d) à fibre optique, chacun desdits diviseurs (54b, 54c) d'entrée ayant une entrée connectée à un amplificateur (52b, 52c) à fibre optique respectif de l'étage précédent et une pluralité de sorties, chaque sortie étant connectée à un amplificateur respectif desdits amplificateurs (52C, 52d) à fibre optique de cet étage.

5. Amplificateur d'impulsions optiques selon la revendication 4, dans lequel:
le dernier étage (SIV) desdits au moins deux étages est constitué par une pluralité de branches, chacune des branches comprenant, dans l'ordre, une cellule Pockels (55) pour l'isolation, un amplificateur respectif parmi lesdits amplificateurs (52d) à fibre optique de cet étage (SIV) et un filtre passe-bande (BPF), et dans lequel une sortie de chacun desdits filtres passe-bande (BPF) est connectée à un amplificateur respectif d'une pluralité correspondante d'amplificateurs (57) à fibre à large aire modale pour générer un signal correspondant de ladite pluralité de signaux d'impulsion de sortie.

6. Amplificateur d'impulsions optiques selon l'une des revendications précédentes, comprenant en outre un moyen permettant de focaliser ladite pluralité de signaux d'impulsion de sorties.

7. Laser comprenant une source d'origine visant à générer ladite première impulsion et au moins un amplificateur d'impulsions optiques selon l'une des revendications précédentes.
